# EUROPÄISCHE PATENTSCHRIFT

(11) **EP 0 921 868 B1**
(45) Veröffentlichungstag und Bekanntmachung des Hinweises auf die Patenterteilung: **21.11.2001**
(21) Anmeldenummer: 97940128.8
(22) Anmeldetag: 26.08.1997
(51) Int. Cl.: B07C 5/02, B03B 9/06

(54) **VORRICHTUNG ZUM SORTIEREN UND VEREINZELN VON ALTGLASSCHERBEN**
DEVICE FOR SORTING AND SEPARATING OLD GLASS SHARDS
DISPOSITIF POUR TRIER ET SEPARER DES DEBRIS DE VERRE USAGE

(30) Priorität: 29.08.1996 DE 19634801
(43) Veröffentlichungstag der Anmeldung: 16.06.1999
(73) Patentinhaber: Exner, Hubertus, D-38667 Bad Harzburg (DE)
(72) Erfinder: Exner, Hubertus, D-38667 Bad Harzburg (DE)
(74) Vertreter: Einsel, Martin, Dipl.-Phys.
(86) Internationale Anmeldenummer: EP9704635
(87) Internationale Veröffentlichungsnummer: WO9808621

(56) Entgegenhaltungen:
- EP-A- 0 526 711
- DE-A- 3 002 239
- US-A- 4 339 027

## Beschreibung

Die Erfindung betrifft eine Vorrichtung zum Sortieren und Vereinzeln von Altglasscherben mit mindestens einer als Schwingkanal ausgebildeten in Förderrichtung geneigten Sortierrinne, die mindestens einen Sortierabschnitt mit einem seitlich zu einem Rand geneigten Boden hat.

Derartige Vorrichtungen sind beispielsweise aus der EP 0 328 126 B1 und der EP 0 461 616 B1 bekannt. Die bei diesen bekannten Vorrichtungen von einem Brecher gebrochenen und von einer Reinigungseinrichtung gereinigten farblich und größenmäßig unsortierten Glasscherben gelangen über einen Förderer in einen Siebklassierer, der die Glasscherben, nachfolgend auch Scherben genannt, in mehrere Fraktionen unterschiedlich großer Scherben sortiert. Die größeren dieser Scherben gelangen dann über mehrere Zwischenschritte fraktionsmäßig in einen Speicherbehälter, der mit einer Einrichtung zur Vereinzelung der ihm zugeführten Glasscherben ausgerüstet ist. Die Vereinzelungsvorrichtung wird im wesentlichen durch eine mit dem Speicherbehälter verbundene Vibrationsrutsche mit entsprechend eingebauten Schikanen gebildet. Die Schikanen stellen dabei die Vereinzelung sicher, so daß mit einem System von nachgeordneten weiteren Rutschen und einer Messung mit Lichtstrahlen die gewünschte farbliche Sortierung erfolgen kann. Die Sortierung erfolgt dann entsprechend der EP 0 328 126 B1 mittels Klappen in Abhängigkeit des Meßergebnisses oder entsprechend der EP 0 461 616 B1 in Abhängigkeit des Meßergebnisses mittels Druckluftdüsen, welche erforderlichenfalls bestimmte farblich erkannte Glasscherben aus der Pfeilrichtung auf der Rutsche in ein seitliches Auffangbehältnis schleudern und nicht erkannte oder andersfarbige von einander nachgeordneten weiteren Meßanordnungen erfaßt werden.

Aus der DE 30 02 239 A1 ist eine Vorrichtung zur Vereinzelung von Teilchen eines Schüttguthaufens, zum Beispiel von Altglasscherben, bekannt, bei der die Vereinzelung dadurch erfolgt, daß eine Schwingrinne vorgezogen ist, die einen sägezahnförmigen Querschnitt aufweist. Dadurch bilden sich mehrere Kanäle in der Schwingrinne, von denen jeder eine geneigte Bodenfläche und eine hierzu etwa senkrechte Seitenwand aufweist. Diese Ausgestaltung soll eine gute Aufteilung des Schüttgutes in einzelne Gutsströme bewirken.

Wesentlich für eine sehr genaue Messung bei der farblichen Sortierung ist die vereinzelte Zuführung von möglichst gleich großen Scherben in die Erkennungselemente. Da jede Glasscherbe einzeln beurteilt werden muß, ist eine Vereinzelung notwendig. Auch sollten die Scherben in ihrer Größe und Formgebung ähnlich sein, da dies zu genaueren Meßergebnissen führt, die beispielsweise mittels zweier Lichtsender und Empfänger in zwei verschiedenen Ebenen in der Mitte einer Glasscherbe gewonnen werden, um Verfälschungen durch Bruchkanten auszuschließen.

Bei den bekannten Vorrichtungen zum Sortieren und Vereinzeln ergeben sich verschiedene Probleme. So neigen die verwandten Stabsiebe oder andere Siebformen zum Zusetzen und die Vereinzelungseinrichtungen, die mit eingebauten Schikanen oder mit sägezahnförmigen Bodenquerschnitten arbeiten, sind recht ungenau. Es können nämlich Glasscherben vorkommen, die entweder nicht vereinzelt der Messung zugeführt werden oder aber ein hohes Gewicht oder eine besonders dick ausgeprägte Formgebung haben, wie etwa Glasböden von Flaschen. Derartige Scherben und solche mit unerwarteten geometrischen Formen können daher maschinell sehr schlecht sortiert werden. Auch nehmen sie beispielsweise bei der pneumatischen Ausschleusung einen völlig unvorhersehbaren Weg. Derartige Vorrichtungen können somit die der vorliegenden Erfindung zugrundeliegenden Aufgabe nicht befriedigend lösen.

Aufgabe der vorliegenden Erfindung ist es, eine Vorrichtung zum Sortieren und Vereinzeln von Altglasscherben zu schaffen, die eine formabhängige Sortierung und Vereinzelung von Glasscherben bei gleichzeitiger Aussortierung von willkürlich dicken und auch fremden Bestandteilen zur Abgabe an eine nachgeordnete Farberkennung gewährleistet.

Diese Aufgabe wird erfindungsgemäß dadurch gelöst, daß an den ersten im Schwingkanal höchstgelegenen Sortierabschnitt mit ersten seitlichen Neigungen in Förderrichtung ein oder mehrere weitere Sortierabschnitte mit jeweils größeren seitlichen Neigungen und ein letzter Sortierabschnitt mit größten seitlichen Neigungen des Bodens zwischen seitlichen Rändern der Sortierrinne anschließen und der Rand an der tiefstgelegenen Bodenkante des letzten Sortierabschnitts reduziert ist und die Höhe eines vertikal wirkenden Stützelements für flache bzw. leicht gebogene Glasscherben hat, so daß lediglich derartige Glasscherben in der Sortierrinne verbleiben.

Erfindungsgemäß hat sich gezeigt, daß eine besonders einfache Ausgestaltung des Bodens eines an sich bekannten Schwingkanals im Zusammenspiel mit einem Stützelement, das letztlich als Sortierkriterium aus einem seitlichen Rand des Schwingkanals gebildet wird, eine robuste und sehr genaue Vorrichtung zum Sortieren und Vereinzeln von Scherben gebildet werden kann. Zu diesem Zweck ist der Boden entlang des Schwingkanals aus einer fast waagerechten Position am oberen Ende des Schwingkanals kontinuierlich zum unteren Ende des Schwingkanals in eine fast senkrechte Stellung zu biegen, wobei mindestens im letzten Abschnitt der seitlich begrenzende Rand in seiner Höhe reduziert ist und als vertikal wirkendes Stützelement für flache bzw. leicht gebogene Glasscherben wirkt. Durch das langsame Schrägstellen bis hin zum fast Senkrechten werden auf einfachste Weise übereinander geschobene oder willkürlich geformte und damit bei Messungen störende Glasstücke ausgesondert und aus der Sortierrinne über das Stützelement herausfallen, bzw. aufgrund ihres Schwerpunktes über das Stützelement herauskippen. Die verbleibenden etwa flachen zumindest nur eine vorgebbare Krümmung aufweisenden Glasscherben verbleiben im letzten Sortierabschnitt in der Sortierrinne und können in diesem Zustand zu nachgeordneten Erkennungselementen abgeführt werden.

Vorteilhaft ist vorgesehen, daß die unterschiedlichen Querschnitte des ersten Sortierabschnitts, der weiteren Sortierabschnitte und des letzten Sortierabschnitts kontinuierlich in Förderrichtung des Schwingkanals ineinander übergehen. Hierdurch wird auf einfachste Weise eine Staubildung vermieden, wobei selbstverständlich auch andere Übergänge denkbar sind.

Ferner ist vorteilhaft vorgesehen, daß der Boden des ersten Sortierabschnitts die zu sortierenden Altglasscherben aufnimmt und eine derartigen Neigung in Förderrichtung und zum seitlichen Rand des Schwingkanals hat, daß die Scherben im tiefsten Abschnitt des Bodens den Rand berührend die Sortierrinne zu den weiteren und letzten Sortierabschnitten hinabrutschen. Der erste Sortierabschnitt stellt somit denjenigen Abschnitt der Sortierrinne dar, auf den zu sortierenden Material aufzubringen ist. In einer entsprechenden Vorrichtung können somit auch mehrere entsprechende Sortierrinnen hintereinander durchlaufen werden, was insbesondere dann Sinn macht, wenn deren Bodenneigungen im letzten Sortierabschnitt im Zusammenhang mit dem dortigen Stützelement unterschiedlich sind, um unterschiedlich große Glasscherben auszusortieren. Der erste Sortierabschnitt der Sortierrinne ordnet somit das völlig vermischte Altglas, welches als Ausgangsmaterial auch Bestandteile, wie Papier, Korken, Keramik, etc. umfaßt. Dieses Material erhält somit eine erste Orientierung zu dem seitlich niedrigeren Rand hin, wobei deren Zusammensetzung und Größe zunächst überhaupt keine Rolle spielt. Durch die Neigung des Schwingkanals gelangt es dann in die weiteren und letzten Sortierabschnitte, in denen dann eine Sortierung und Vereinzelung erfolgt.

Weiter ist vorgesehen, daß die seitliche Neigung des Bodens zu Beginn des ersten Sortierabschnitts bezogen auf eine waagerechte nur einige Grad und am Ende des letzten Sortierabschnitts nur einige Grad weniger als 90° bezogen auf die Waagerechte beträgt. D. h., der erste Sortierabschnitt hat nur eine sehr geringe Neigung, die sich bis zum letzten Sortierabschnitt auf knapp 90° verstärkt. im ersten Sortierabschnitt orientieren sich die Altglasbestandteile am Rand der tiefstgelegenen Bodenkante und werden längs der Sortierrinne dann sozusagen fast senkrecht aufgestellt, jedenfalls soweit, daß die gewünschten Scherben sich schwerkraftbedingt noch am Boden abstützen können. Der gegebene Winkelbereich ist dabei an die auszusortierenden Altglasscherben anzupassen, wie weiter unten noch näher erläutert wird.

Es ist ferner vorgesehen, daß sämtliche Sortierabschnitte in Förderrichtung eine voneinander unabhängige Länge haben und der erste Sortierabschnitt eine größte und der letzte Sortierabschnitt eine geringste Breite rechtwinklig zur Förderebene hat. Abhängig von den zu fördernden Altglasscherben und vom größten zu erreichenden Neigungswinkel, der mit einer Verringerung der Breite der Sortierrinne einhergeht, haben die einzelnen Sortierabschnitte unterschiedliche Längen, wobei der erste am kürzesten und der letzte am längsten ist.

Gemäß einer besonderen Ausgestaltung der Erfindung ist vorgesehen, daß der lotrechte Rand des Schwingkanals, bezogen auf die tiefstgelegene Bodenkante der weiteren Sortierabschnitte, in Förderrichtung kontinuierlich abnimmt und in das Stützelement des letzten Sortierabschnitts übergeht, und mindestens dem letzten Sortierabschnitt eine darunter befindliche Vorrichtung zur Aufnahme überkippender Scherben und sonstiger Bestandteile zugeordnet ist. Um die Sortierrinne möglichst schnell, also bereits in den weiteren Sortierabschnitten von übermäßig großen auszusortierenden Scherben zu entlasten, kann vorteilhaft bereits der Rand im Bereich der weiteren Sortierabschnitte kontinuierlich abnehmen. Vorteilhaft können überkippende Scherben dann in eine darunter befindliche Aufnahmevorrichtung fallen.

Ferner ist vorgesehen, daß der kontinuierlich in seiner Neigung steiler werdende Boden die im letzten Sortierabschnitt weitgehend aufgerichteten Scherben in Abhängigkeit der lotrechten Höhe des Stützelements vereinzelt und flache und ähnliche Scherben sortiert und nachgeordneten Erkennungselementen zuführt. Durch das langsame Schrägstellen bis hin zum fast Senkrechten werden hierdurch vorteilhaft übereinandergeschobene oder willkürlich geformte und damit bei Messungen störende Glasbruchstücke ausgesondert und aus der Sortierrinne einfach herausfallen bzw. aufgrund ihres Schwerpunktes herauskippen. Nur noch ungefähr flache bzw. wie üblich gebogene Glasscherben verbleiben in der Sortierrinne und können in diesem Zustand zu nachfolgenden Erkennungselementen geführt werden.

Vorteilhaft ist vorgesehen, daß ein gedachtes Dreieck aus dem Stegelement mit bestimmter Höhe und dem Boden bestimmter Schräge und einer gedachten Kathete das Sortierkriterium bestimmt. Ersichtlich bildet der schräge Boden eine schiefe Ebene, auf der nur diejenigen Scherben verbleiben, die durch das Stützelement vertikal gestützt werden und nicht aufgrund ihres Schwerpunktes über das Stützelement hinweg abkippen. Die Neigung des Bodens bildet somit in Abhängigkeit der Höhe des Stegelements ein einfach zu erzeugendes Sortierkriterium, welches ein sicheres aussortieren ermöglicht.

Gemäß einer weiteren Ausgestaltung kann vorgesehen sein, daß über den abnehmenden Rand und/oder das Stegelement kippendes Altglas in einen ersten Sortierabschnitt eines entsprechend angeordneten weiteren Schwingkanals fällt, mit Neigungen der Sortierabschnitte, die an die Abmessungen der weiter auszusortierenden Scherben angepaßt sind. Somit können auf diese Weise kaskadenartig mehrere Sortierrinnen nacheinander angeordnet werden, wobei jede hinsichtlich Neigung und Stegelement an bestimmte auszusortierende Scherbengrößen angepaßt werden kann.

Ferner ist vorgesehen, daß der Schwingkanal einen orthogonal zur Förderebene und Förderrichtung ausgerichteten oberen Rand hat. Ein solcher Rand ist deshalb besonders sinnvoll, weil der erste Sortierabschnitt verhältnismäßig ungeordnet mit Altglasscherben beaufschlagt wird, welche somit aus diesem nicht herausfallen können.

Es steht somit eine Vorrichtung mit auch kaskadenartig anzuordnenden Sortierrinnen zur Verfügung, mit der problemlos Altglas sortiert werden kann, welches sogar dicke und unförmige Glasflaschenböden etc. enthalten kann.

Weitere vorteilhafte Ausgestaltungen der Erfindung ergeben sich aus den unteren Ansprüchen. Ein Ausführungsbeispiel der Erfindung wird nachfolgend unter Bezugnahme auf eine Zeichnung näher erläutert. Darin zeigt:
- Fig. 1: die Ausrichtung und Anordnung einer anmeldungsgemäßen Vorrichtung ohne erfindungsgemäße Sortierrinne anhand eines kastenförmigen Schwingkanals,
- Fig. 2: einen schematischen Querschnitt entsprechend Linie A-A in Fig. 1 für eine erfindungsgemäße Sortierrinne,
- Fig. 3: einen schematischen Querschnitt entsprechend Linie B-B in Fig. 1 für eine erfindungsgemäße Sortierrinne,
- Fig. 4: einen schematischen Querschnitt entsprechend Linie C-C in Fig. 1 für eine erfindungsgemäße Sortierrinne, und
- Fig. 5: einen schematischen Querschnitt entsprechend Linie D-D in Fig. 1 für eine erfindungsgemäße Sortierrinne.

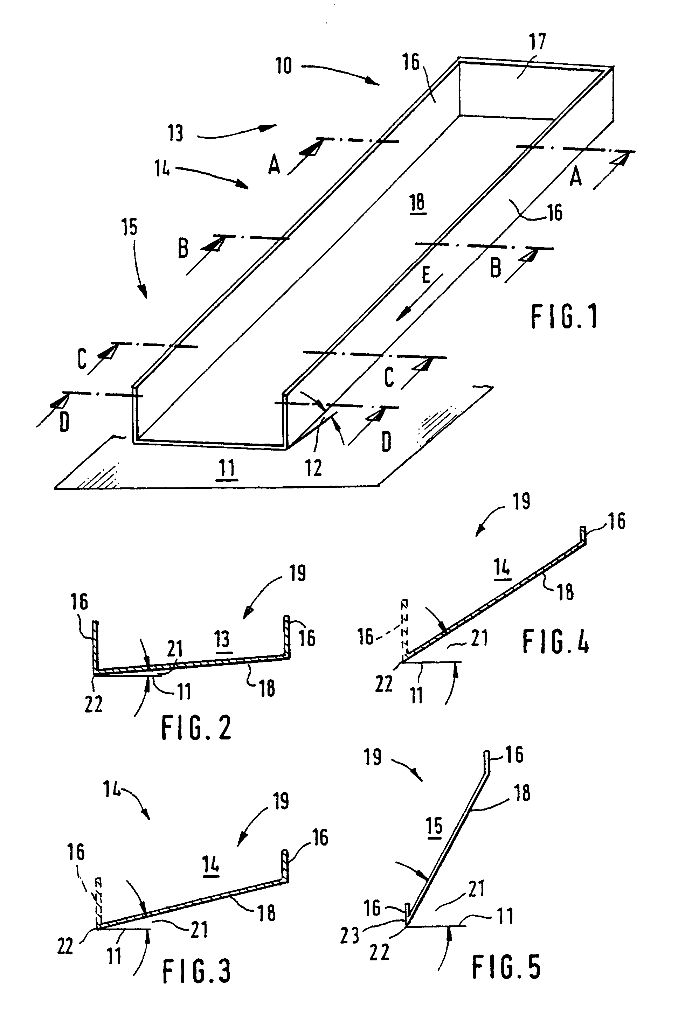

**Fig. 1** zeigt eine Vorrichtung zum Sortieren und Vereinzeln von Altglas, vorzugsweise Altglasscherben anhand eines rechteckigen Schwingkanals 10, welcher entsprechend den weiteren Fig. 2 bis 5 in seinem Querschnitt erfinderisch weitergebildet ist. Der Schwingkanal 10 der Fig. 1 weist grundsätzlich eine längliche zunächst rechteckige Gestalt auf und ist gegenüber einer horizontalen Ebene 11 schräg zulaufend auf diese unter einem kleinen Winkel 12 angeordnet. Der Schwingkanal 10 ist ferner schwingend als Vibrationsförderer ausgebildet und weist in seiner Längsrichtung von in Fig. 1 oben nach unten in Förderrichtung gemäß Pfeil E nacheinander einen nicht weiter bezeichneten ersten, einen oder mehrere weitere und einen letzten Sortierabschnitt 13, 14 und 15 auf. Der Schwingkanal 10 weist ferner als seitliche Begrenzung Ränder 16 auf, also Randelemente, die lotrecht und orthogonal zur Förderebene angeordnet sein können. Am oberen Ende des Schwingkanals 10 ist dieser mit einem oberen Rand 17 entsprechend begrenzt. Am unteren Ende des Schwingkanals 10 ist dieser in der Regel offen. Dem unteren Ende des Schwingkanals 10 nachgeordnet sind nicht weiter dargestellte Erkennungselemente, insbesondere zur Farberkennung.

Der entsprechend Fig. 1 angeordnete Schwingkanal 10 wird im Bereich seines ersten Sortierabschnitts 13 mit Altglasscherben, also mit den zu sortierenden Elementen beschickt, welche dann aufgrund der inneren Gestaltung des Schwingkanals 10, aufgrund einer zum in der Fig. 1 linken Rand 16 vom Boden 18 gebildeten schiefen Ebene rutschen und wegen des flacher werdenden Rands 16 über diesen hinweg aus dem Schwingkanal 10 herauskippend aussortiert werden.

Die im Schwingkanal 10 auszubildende Sortierrinne 19 wird erfindungsgemäß aus einer bestimmten sich in Förderrichtung E verändernden Querschnittsgeometrie der Ränder 16 und des Bogens 18 gebildet, welche in den Figuren 2 bis 5 beispielhaft dargestellt sind. Die unterschiedlichen Querschnittsgeometrien der Sortierrinne 19 bzw. letztlich des Schwingkanals 10 sind also nicht in Fig. 1 sondern in den Figuren 2 bis 5 beispielhaft dargestellt.

**Fig. 2** zeigt einen schematischen Querschnitt entsprechend Linie A-A in Fig. 1. Gut zu erkennen ist, daß der Boden 18 zur waagerechten Ebene 11 einen Neigungswinkel 21 hat, der nur wenige Grad beträgt und in Förderrichtung E leicht zunimmt. Der Boden 18 ist zum Rand 16 geneigt, wodurch sich in diesen ersten Abschnitt 13 eingebrachte Altglasscherben zum Rand 16 hin orientieren und aufgrund des Neigungswinkels 12 in Förderrichtung E der Sortierrinne 19 zum anschließenden weiteren Sortierelement 14 abrutschen.

**Fig. 3** zeigt beispielhaft den Querschnitt eines weiteren Sortierelements 14, in welches das erste Sortierelement 13 kontinuierlich übergegangen ist. Gut zu erkennen ist der inzwischen zur Ebene 11 gebildete größere Neigungswinkel 21 des Bodens 18, wodurch auf ihm befindlichen Glasscherben kraftvoll gegen den in der Fig. 3 linken Rand 16 gedrückt werden. Der Rand 16 ist gestrichelt dargestellt, wodurch angedeutet ist, daß der Rand 16 entlang des weiteren Sortierabschnitts 14 bezüglich der tiefstgelegenen Bodenkante 22 kontinuierlich abnimmt. Bereits bei dieser Neigung des Bodens 18 ist gut vorstellbar, daß besonders große Altglasbestandteile über den Rand 16 hinweg seitlich herauskippen. Diesem weiteren Sortierabschnitt 14 kann noch ein weiterer Sortierabschnitt 14 nachgeordnet sein.

**Fig. 4** zeigt entsprechend Fig. 3 einen weiteren Sortierabschnitt 14 mit einem wesentlich vergrößerten Neigungswinkel 21 zwischen Ebene 11 und Boden 18. Im übrigen wird auf die Beschreibung zu Fig. 3 verwiesen.

**Fig. 5** zeigt die Sortierrinne 19 am unteren Ende des Schwingkanals 10 im Querschnitt. Der Neigungswinkel 21 zwischen Ebene 11 und Boden 18 ist nun nahe 90°. Der in der Fig. 5 rechte Rand 16 ist noch dargestellt, kann allerdings entfallen, da der Boden 18 seine Funktion übernimmt. Der in der Fig. 5 linke Rand 16 ist in seiner lotrechten Höhe zu einem Stützelement 23 geschrumpft und bildet eine Stütze für auf der schiefen Ebene des Bodens 18 befindliche flache, leicht gebogene Scherben. Ersichtlich finden extrem dicke Scherben aufgrund ihres weit nach links verschobenen Schwerpunktes keinen Halt auf dem Stützelement 23 und übereinander geschobene Scherben ebenfalls nicht. Auf der schiefen Ebene des Bodens 18 befinden sich somit vereinzelt flache nur leicht gebogene einander ähnliche Scherben, die entweder schon auf der schiefen Ebene oder nachgeordneten Erkennungselementen zugeführt werden. Ersichtlich bildet das Zusammenspiel von Neigungswinkel 21 des Bodens 18 mit der Höhe des Stützelements 23 das wesentliche Sortierkriterium. Es ist daher vorgesehen, daß kaskadenförmig nacheinander mehrere Sortierrinnen vorhanden sind, wobei die über das Stützelement jeweils abgekippten aussortierten Scherben in einen ersten Sortierabschnitt einer weiteren darunter angeordneten Sortierrinne fallen, die dann andere Neigungswinkel und andere Stützelemente aufweisen kann, um größere oder auch kleinere Scherben sicher auszusortieren und Erkennungselementen zuzuführen.

Es ist somit erfindungsgemäß möglich, daß am Ende des Schwingkanals 10 vereinzelt nacheinander nur noch Glasscherben in gewünschter Größe am Stützelement abgestützt auf dem Boden 18 liegen und von dort einer nachfolgenden Messung zur Farberkennung sehr genau zugeführt werden können. Letzteres ist daher sehr wichtig, weil Sortierungen zur Herstellung von Weißglas sehr genau sein müssen, d. h., es dürfen maximal nur 0,3 % farbige Scherben zwischen die Weißglasscherben geraten. Dies wird erfindungsgemäß mit einfachsten Mitteln gelöst.

Zu erwähnen ist noch, daß die Länge der Sortierabschnitte an den Volumenstrom nur teilweise anzupassen sind. D. h., der erste Sortierabschnitt 13 ist entsprechend Fig. 2 verhältnismäßig breit und kann daher kürzer sein, als der letzte Sortierabschnitt 15, der entsprechend Fig. 5 verhältnismäßig schmal ist. Da jedoch der Volumenstrom durch seitlich längs der Förderrichtung aussortierte Scherben reduziert wird, wirkt sich dies verkürzend auf den letzten Sortierabschnitt aus. Die Längserstreckung der einzelnen Sortierabschnitte unterliegt daher nur teilweise einer exakten mathematischen Beziehung.

## Patentansprüche

1. Vorrichtung zum Sortieren und Vereinzeln von Altglasscherben mit mindestens einer als Schwingkanal ausgebildeten in Förderrichtung geneigten Sortierrinne, die mindestens eine Ausgangsöffnung und mindestens einen Sortierabschnitt mit einem seitlich zu einem Rand geneigten Boden hat,
**dadurch gekennzeichnet,**
**daß** an den ersten im Schwingkanal (10) höchstgelegenen Sortierabschnitt (13) mit ersten seitlichen Neigungen (21) in Förderrichtung ein oder mehrere weitere Sortierabschnitte (14) mit jeweils größeren seitlichen Neigungen (21) und ein letzter Sortierabschnitt (15) mit größten Neigungen (21) des Bodens (18) zwischen seitlichen Rändern (16) der Sortierrinne (19) anschließen und der Rand (16) an der tiefstgelegenen Bodenkante (22) des letzten Sortierabschnitts (15) reduziert ist und die Höhe eines vertikal wirkenden Stützelements (23) für flache bzw. leicht gebogene Glasscherben hat, so daß lediglich derartige Glasscherben in der Sortierrinne verbleiben.

2. Vorrichtung nach Anspruch 1,
**dadurch gekennzeichnet,**
**daß** die unterschiedlichen Querschnitte des ersten Sortierabschnitts (13), der weiteren Sortierabschnitte (14) und des letzten Sortierabschnitts (15) kontinuierlich in Förderrichtung des Schwingkanals (10) ineinander übergehen.

3. Vorrichtung nach Anspruch 2,
**dadurch gekennzeichnet,**
**daß** der Boden (18) des ersten Sortierabschnitts (13) die zu sortierenden Altglasscherben aufnimmt und eine derartige Neigung (12, 21) in Förderrichtung und zum seitlichen Rand (16) des Schwingkanals (10) hat, daß die Scherben im tiefsten Abschnitt des Bodens den Rand (16) berührend die Sortierrinne (19) zu den weiteren und letzten Sortierabschnitten (14, 15) hinabrutschen.

4. Vorrichtung nach Anspruch 3,
**dadurch gekennzeichnet,**
**daß** die seitliche Neigung (21) des Bodens (18) zu Beginn des ersten Sortierabschnitts (13) bezogen auf eine Waagerechte (11) nur einige Grad und am Ende des letzten Sortierabschnitts (15) nur einige Grad weniger als 90° bezogen auf die Waagerechte (11) beträgt.

5. Vorrichtung nach Anspruch 4,
**dadurch gekennzeichnet,**
**daß** sämtliche Sortierabschnitte (13, 14, 15) in Förderrichtung unterschiedliche Längen haben, und der erste Sortierabschnitt (13) eine größte und der letzte Sortierabschnitt (15) eine geringste Breite rechtwinklig zur Förderebene hat.

6. Vorrichtung nach einem oder mehreren der vorhergehenden Ansprüche,
**dadurch gekennzeichnet,**
**daß** der lotrechte Rand (16) des Schwingkanals (10), bezogen auf die tiefstgelegene Bodenkante (22) der weiteren Sortierabschnitte (14), in Förderrichtung kontinuierlich abnimmt und in das Stützelement (23) des letzten Sortierabschnitts (15) übergeht, und mindestens dem letzten Sortierabschnitt (15) eine darunter befindliche Vorrichtung zur Aufnahme überkippender Scherben und sonstiger Bestandteile zugeordnet ist.

7. Vorrichtung nach Anspruch 6,
**dadurch gekennzeichnet,**
**daß** der kontinuierlich in seiner Neigung (21) steiler werdende Boden (18) die im letzten Sortierabschnitt (15) weitgehend aufgerichteten Scherben, in Abhängigkeit der lotrechten Höhe des Stützelements (23) vereinzelt und flache und ähnliche Scherben sortiert nachgeordneten Erkennungselementen zuführt.

8. Vorrichtung nach Anspruch 7,
**dadurch gekennzeichnet,**
**daß** ein gedachtes Dreieck aus dem Stegelement (23) mit bestimmter Höhe und dem Boden (18) mit bestimmter Schräge und einer gedachten Kathete das Sortierkriterium bestimmt.

9. Vorrichtung nach Anspruch 8,
**dadurch gekennzeichnet,**
**daß** über den abnehmenden Rand (16) und/oder das Stegelement (23) kippendes Altglas in einen ersten Sortierabschnitt (13) eines entsprechend angeordneten weiteren Schwingkanals (10) fällt, mit Neigungen (21) der Sortierabschnitte (13, 14, 15), die an die Abmessungen der weiter auszusortierenden Scherben angepaßt sind.

10. Vorrichtung nach einem oder mehreren der vorhergehenden Ansprüche,
**dadurch gekennzeichnet,**
**daß** der Schwingkanal (10) einen orthogonal zur Förderebene und Förderrichtung ausgerichteten oberen Rand (17) hat.

## Claims

1. Device for sorting and separating pieces of waste glass with at least one sorting chute, which is constructed as an oscillating trough, is inclined in the direction of transport and has at least one outlet and at least one sorting section with a base inclined laterally to an edge, **characterised in that** connecting to the first highest located sorting section (13) in the oscillating trough (10) with first lateral inclinations (21) in the direction of transport are one or more further sorting sections (14) respectively with greater lateral inclinations (21) and a last sorting section (15) with the greatest inclinations (21) of the base (18) between lateral edges (16) of the sorting chute (19) and the edge (16) is reduced at the lowest located base edge (22) of the last sorting section (15) and has the height of a vertically acting support element (23) for flat or slightly curved glass pieces so that only such glass pieces remain in the sorting chute.

2. Device according to Claim 1, **characterised in that** the different cross-sections of the first sorting section (13), of the further sorting sections (14) and the last sorting section (15) continuously merge into one another in the direction of transport of the oscillating trough (10).

3. Device according to Claim 2, **characterised in that** the base (18) of the first sorting section (13) receives the pieces of waste glass to be sorted and has such an inclination (12, 21) in the direction of transport and to the lateral edge (16) of the oscillating trough (10) that the glass pieces in the lowest section of the base slide down the sorting chute (19), touching the edge (16), to the further and last sorting sections (14, 15).

4. Device according to Claim 3, **characterised in that** at the beginning of the first sorting section (13) the lateral inclination (21) of the base (18) amounts to only a few degrees relative to a horizontal (11), and at the end of the last sorting section (15) amounts to only a few degrees less than 90° relative to the horizontal (11).

5. Device according to Claim 4, **characterised in that** all the sorting sections (13, 14, 15) have different lengths in the direction of transport, and the first sorting section (13) has the greatest width and the last sorting section (15) has the smallest width at right angles to the transport plane.

6. Device according to one or more of the preceding claims, **characterised in that** the vertical edge (16) of the oscillating trough (10), relative to the lowest located base edge (22) of the further sorting sections (14), continuously decreases in the direction of transport and merges into the support element (23) of the last sorting section (15), and allocated to at least the last sorting section (15) is a device located below this to receive overtipped glass pieces and other constituents.

7. Device according to Claim 6, **characterised in that** the base (18), which is continuously becoming steeper in its inclination (21), separates the glass pieces that are predominantly upright in the last sorting section (15), in dependence on the vertical height of the support element (23), and sorts flat and similar glass pieces and feeds them to subsequent identification elements.

8. Device according to Claim 7, **characterised in that** an imaginary triangle comprising the web element (23) with a specific height and the base (18) with a specific inclination and an imaginary cathetus determines the sorting criterion.

9. Device according to Claim 8, **characterised in that** waste glass tipping over the decreasing edge (16) and/or the web element (23) drops into a first sorting section (13) of an appropriately disposed further oscillating trough (10), with inclinations (21) of the sorting sections (13, 14, 15) which are adapted to the dimensions of the glass pieces to be sorted further.

10. Device according to one or more of the preceding claims, **characterised in that** the oscillating trough (10) has an upper edge (17) oriented orthogonally to the transport plane and direction of transport.

## Revendications

1. Dispositif pour trier et déparier des tessons de verre recyclé doté au moins d'une glissière de tri inclinée dans le sens de transport et formée comme un canal basculant, laquelle possède au moins un orifice de sortie et au moins une section de tri munie d'un fond incliné latéralement vers un bord,
**caractérisé en ce que**
au niveau de la première section de tri (13) située le plus en haut dans le canal basculant (10) doté de premières inclinaisons latérales (21) dans le sens de transport sont reliées une ou plusieurs sections de tri plus éloignées (14) dotées respectivement de plus grandes inclinaisons latérales (21) et une dernière section de tri (15) dotée des plus grandes inclinaisons (21) du fond (18) entre des bords latéraux (16) de la glissière de tri (19) et **en ce que** le bord (16) est réduit au niveau de l'arête du fond la plus basse (22) de la dernière section de tri (15), et **en ce qu'**il présente la hauteur d'un élément de support (23) agissant à la verticale et servant à des tessons de verre plats ou légèrement inclinés, de telle sorte que seuls ces types de tessons de verre restent dans la glissière de tri.

2. Dispositif selon la revendication 1,
**caractérisé en ce que** les différentes sections transversales de la première section de tri (13), des sections de tri plus éloignées (14) et de la dernière section de tri (15) se confondent continuellement dans le sens de transport du canal basculant (10).

3. Dispositif selon la revendication 2,
**caractérisé en ce que** le fond (18) de la première section de tri (13) soulève les tessons de verre à trier et présente ladite inclinaison (12, 21) dans le sens de transport et par rapport au bord latéral (16) du canal basculant (10), et **en ce que** les tessons glissent vers les sections de tri plus éloignées et les dernières sections de tri (14, 15) le long de la glissière de tri (19) en touchant le bord (16) dans la section la plus basse du fond.

4. Dispositif selon la revendication 3,
**caractérisé en ce que** l'inclinaison latérale (21) du fond (18) n'est que de quelques degrés par rapport à un plan horizontal (11) au début de la première section de tri (13) et n'est que de quelques degrés inférieure à 90° par rapport au plan horizontal (11) au bout de la dernière section de tri (15).

5. Dispositif selon la revendication 4,
**caractérisé en ce que** des sections de tri identiques (13, 14, 15) présentent des longueurs différentes dans le sens de transport, et **en ce que** la première section de tri (13) possède la plus grande largeur et la dernière section de tri (15) possède la plus petite largeur à angle droit par rapport au plan de transport.

6. Dispositif selon l'une ou plusieurs des revendications précédentes, **caractérisé en ce que** le bord perpendiculaire (16) du canal basculant (10), par rapport à l'arête du fond la plus basse (22) des sections de tri plus éloignées (14), diminue en continu dans le sens de transport et passe dans l'élément de support (23) de la dernière section de tri (15), et **en ce qu'**un dispositif situé en dessous et destiné à recevoir des tessons qui se déversent et d'autres éléments est relié à la dernière section de tri (15).

7. Dispositif selon la revendication 6,
**caractérisé en ce que** le fond (18) devenant pentu de manière continue dans son inclinaison (21), amène les tessons largement relevés dans la dernière section de tri (15), séparés en fonction de la hauteur perpendiculaire de l'élément transversal (23), et des tessons plats et similaires triés, à des éléments de reconnaissance situés en aval.

8. Dispositif selon la revendication 7,
**caractérisé en ce qu'**un triangle imaginaire composé de l'élément transversal (23) avec une hauteur déterminée et du fond (18) avec une inclinaison déterminée et un côté d'angle droit imaginaire définit le critère de tri.

9. Dispositif selon la revendication 8,
**caractérisé en ce que**, au-dessus du bord qui se réduit (16) et/ou de l'élément formant entretoise (23), du verre recyclé qui se déverse tombe dans une première section de tri (13) d'un autre canal basculant (10) disposé de manière analogue, ave des inclinaisons (21) des sections de tri (13, 14, 15) qui sont adaptées aux dimensions des tessons devant être triés par la suite.

10. Dispositif selon l'une ou plusieurs des revendications précédentes, **caractérisé en ce que** le canal basculant (10) possède un bord supérieur orienté de manière orthogonale par rapport au plan de transport et au sens de transport.
